# EUROPÄISCHE PATENTSCHRIFT

(11) **EP 2 848 386 B1**
(45) Veröffentlichungstag und Bekanntmachung des Hinweises auf die Patenterteilung: **02.08.2017**
(21) Anmeldenummer: 14184723.6
(22) Anmeldetag: 15.09.2014
(51) Int. Cl.: B29C 49/46, B29C 49/48, B29C 49/56, B29C 49/06, B29C 49/12, B29C 49/28, B29C 49/36, B29C 49/38, B29C 49/64, B29L 31/00

(54) **Vorrichtung zum Umformen von Kunststoffvorformlingen zu Kunststoffbehältnissen sowie Blasformträger**
Apparatus for shaping plastics material preforms into plastics material containers
Appareil pour souffler des préformes en matière plastique en conteneurs en matière plastique

(30) Priorität: 13.09.2013 DE 102013015093
(43) Veröffentlichungstag der Anmeldung: 18.03.2015
(73) Patentinhaber: Krones AG, 93073 Neutraubling (DE)
(72) Erfinder: Handschuh, Eduard, 93073 Neutraubling (DE); Geltinger, Florian, 93073 Neutraubling (DE); Neubauer, Michael, 93073 Neutraubling (DE); Philipp, Thomas, 93073 Neutraubling (DE); Voth, Klaus, 93073 Neutraubling (DE)
(74) Vertreter: Bittner, Bernhard

(56) Entgegenhaltungen:
- EP-A2- 2 422 953
- DE-A1-102008 038 141
- JP-A- H04 101 813
- US-A1- 2012 261 865

## Beschreibung

Die vorliegende Erfindung bezieht sich auf eine Vorrichtung zum Umformen von Kunststoffvorformlingen zu Kunststoffbehältnissen und einen Blasformträger. Derartige Vorrichtungen sind aus dem Stand der Technik seit langem bekannt. Dabei werden üblicherweise in einer Vielzahl von Blasstationen Kunststoffvorformlinge durch Beaufschlagung mit Druckluft zu Kunststoffbehältnissen umgeformt. Im Rahmen des Expansionsvorgangs findet eine Menge von nebeneinander ablaufenden Bewegungsvorgängen statt. So werden üblicherweise die Blasformträgerhälften auseinandergeklappt, um einen Kunststoffvorformling einzubringen und anschließend zusammengeklappt, um den Expansionsprozess durchführen zu können. Nach Beendigung des Expansionsvorgangs werden die Blasformträgerteile wieder auseinandergeklappt, um so das fertig geblasene Kunststoffbehältnis entnehmen zu können. In dem geschlossenen Zustand der Blasformträgerteile, insbesondere während des Expansionsvorgangs, werden dabei zusätzlich die Blasformträgerteile miteinander verriegelt, um so den nicht unerheblichen Drücken standhalten zu können. Üblicherweise ist an einem der beiden Blasformträgerteile ein Druckkissenmechanismus angeordnet, um die zwei an den Blasformträgerteilen angeordneten Blasformen während des vorherrschenden Innendrucks beim Blasvorgang mit einer größeren Kraft zusammenzupressen, als sie vom Blasdruck hervorgerufen wird. Dadurch werden auf den hergestellten Behältern sichtbare Trennnähte möglichst klein gehalten.

Weiterhin sind aus dem Stand der Technik sterile Anwendungen bekannt, bei denen die einzelnen Blasstationen innerhalb eines Reinraums geführt werden. So wird beispielsweise in der WO 2010/020529 A2 eine Vorrichtung zum Umformen von Kunststoffvorformlingen zu Kunststoffbehältnissen beschrieben, welche eine mehrere Blasstationen umfassende Transporteinrichtung und einen Reinraum aufweist.
Mittels des Reinraums können aseptische Bedingungen bei der Herstellung der Kunststoffbehältnisse und auch bei deren Abfüllung mit Getränken gewährleistet werden.
In einigen Ländern werden für derartige aseptische Behandlungen Richtlinien aufgestellt. So werden beispielsweise in den USA derartige Richtlinien seitens der FDA (Food and Drug Administration) aufgestellt und überwacht.

Die Druckschrift US 2012/0261865 A1 offenbart eine Vorrichtung zum Umformen von Kunststoffvorformlingen in Kunststoffbehältnisse. Hierfür ist zumindest eine Blasformstation vorgesehen, welche auf einem beweglichen Träger angeordnet ist.

Aus der DE 10 2008 038 141 A1 ist eine Vorrichtung zum Umformen von Kunststoffvorformligen mit Sterilraum bekannt. Die Vorrichtung weist dabei eine Transporteinrichtung auf, an welcher eine Vielzahl von Blasstationen angeordnet ist, wobei jede dieser Blasstationen eine Blasform aufweist.

Die EP 2 422 953 A2 zeigt eine Blasform, insbesondere zum Herstellen blas- oder streckblasgeformter Behälter, mit durch einen kraftübertragenen Betätigungsmechanismus relativ zueinander beweglichen Formträgerteilen zum Öffnen, Schließen und Verriegeln von einen Formhohlraum definierenden, an den Formträgerteilen montierten Formteilen.

In der Druckschrift JP H04-101813 ist eine Blasform zum Blasformen von Kunststoffbehältnissen offenbart, welche eine erhöhte Haltbarkeit aufweist.

Wie oben erwähnt, ist eine wichtige Komponente einer Blasstation jeweils der Verriegelungsmechanismus, der während des Blasvorgangs die beiden Formträgerhälften miteinander verbindet bzw. verriegelt. Nach Beendigung des Blasvorgangs öffnet sich die Verriegelung. Die Flasche kann nach dem Öffnen der Form entnommen und ein neuer Vorformling eingebracht werden. Im Stand der Technik weist dieser Verriegelungsmechanismus üblicherweise eine Verriegelungswelle auf, die in einem der beiden Formträger gelagert ist. Mehrere über die Höhe des Formträgers verteilte Lagerstellen gewährleisten eine gleichmä ßige Kraftverteilung in den Bauteilen. Dies ist wichtig, da die Verriegelung eine Haltekraft von mehreren 10.000 N aufnehmen muss. Der Verriegelungsvorgang besteht beispielsweise aus einer Rotations- oder einer Linearbewegung der Verriegelung. Diese Bewegung wird dabei üblicherweise von einer stationären, am Grundaufbau der Maschine befestigten Kurve erzeugt und über verschiedene Umlenkungen an die Verriegelungswelle weitergeleitet.

Die Öffnungs- und Schließbewegung des Formträgers ist davon unabhängig und separat gesteuert. Die Ansteuerung erfolgt über eine stationäre Steuerkurve. Man benötigt also für die gesamte Ansteuerung zwei Kurven, eine um die beiden Formträgerhälften zu steuern und eine um die Verriegelung zu steuern.

Es kann auch noch nötig sein, eine Temperierung der Blasformen und/oder der Blasformträgerschalen zur Verfügung zu stellen, um die Kunststoffoberfläche bei der Expansion schnell abzukühlen oder zu beheizen.

Es hat sich gezeigt, dass die zwei Blasformträgerteile unterschiedlichen Anforderungen unterliegen.

So ist es z.B. möglich, dass ein asymmetrisches Öffnen der Blasformträgerteile kinematische Vorteile bietet, um Vorformlinge schonend (für den Vorformling und die Steuerkurven der Blasform und die einsetzenden und entnehmenden Transfersterne) in die Blasform einsetzen zu können. Wenn ein Blasformträgerteil hierzu weiter geschwenkt werden muss als das andere, sind die Kräfte auf das eine höher.

Weiterhin muss ein Blasformträgerteil den eingangs genannten Druckkissenmechanismus aufnehmen, was dieses wiederum schwerer macht.

Weiterhin ist es möglich, den eingangs genannten Verriegelungsmechanismus mit den Blasformträgerteilen mitzuschwenken. Dieser Verriegelungsmechanismus weist üblicherweise bewegte Teile (z.B. einen drehbaren Haken) auf, welche zumindest von einem Blasformträgerteil aufgenommen werden müssen, was dieses wiederum schwerer macht während das andere Blasformträgerteil lediglich eine Oberfläche zur Verfügung stellen muss, um einen Formschluss für die bewegten Teile des anderen herzustellen (z.B. eine Nut zur Aufnahme des Hakens).

Es ist daher wünschenswert, die Blasformträgerteile einer Blasstation an die unterschiedlichen Anforderungen anzupassen, insbesondere im Hinblick auf die Kinematik und das Gewicht. Dies wird durch eine Vorrichtung nach Anspruch 1 und einen Blasformträger nach Anspruch 12 erreicht. Vorteilhafte Ausführungsformen und Weiterbildungen sind Gegenstand der Unteransprüche.
Eine erfindungsgemäße Vorrichtung zum Umformen von Kunststoffvorformlingen zu Kunststoffbehältnissen umfasst wenigstens eine an einem beweglichen Träger angeordnete Blasstation, wobei diese Blasstation einen Blasformträger zum Halten einer Blasform aufweist und dieser Blasformträger ein erstes Blasformträgerteil und ein zweites Blasformträgerteil aufweist, wobei das zweite Blasformträgerteil von dem ersten Blasformträgerteil wegbewegbar ist, um die Blasform für die Entnahme eines Kunststoffbehältnisses und/oder für die Eingabe eines Vorformlings zu öffnen und wobei das zweite Blasformträgerteil auf das erste Blasformträgerteil zu bewegbar ist, um die Blasform zur Umformung des Vorformlings in einen geschlossenen Zustand zu überführen.

Erfindungsgemäß weist das zweite Blasformträgerteil eine geringere Dichte und/oder Festigkeit auf als das erste Blasformträgerteil.

Durch die individuelle Auswahl der Dichte der Materialien oder der Materialien selbst, aus denen die Blasformträgerteile bestehen, können diverse Funktionen je nach Bedarf auf die beiden Blasformträgerteile verteilt werden.

Das Dichteverhältnis vom zweiten zum ersten Blasformträgerteil liegt insbesondere in einem Bereich von 0,2 bis 0,6, bevorzugt zwischen 0,3 und 0,45.

Die Dichte des zweiten Blasformträgerteil liegt insbesondere in einem Bereich zwischen 2 und 4 kg/dm³, die des ersten Blasformträgerteils zwischen 7 und 9 kg/dm³.

Das Festigkeitsverhältnis vom zweiten zum ersten Blasformträgerteil liegt insbesondere in einem Bereich von 0,5 bis 0,95, bevorzugt zwischen 0,7 und 0,9.

Die Zugfestigkeit des zweiten Blasformträgerteils liegt insbesondere zwischen 440 und 520 N/mm² (Rm), die des ersten Blasformträgerteils zwischen 480 und 850 N/mm².

Insbesondere besteht das zweite Blasformträgerteil im Wesentlichen aus einer Aluminiumlegierung und das erste Blasformträgerteil aus einer Stahllegierung, insbesondere aus einem Edelstahl.

Insbesondere besteht die Aluminiumlegierung aus mindestens 51% Aluminiumatomen. Weitere Legierungsbestandteile können unter anderem Zink, Magnesium und/oder Kupfer sein. Es ist auch denkbar, Mangan oder Nickel als weitere Bestandteile der Legierung vorzusehen. Die Aluminiumlegierung ist insbesondere unanfällig bzgl. Korrosion, auch bei Kontakt mit Sterilisations- oder Reinigungsmedien.

Der Stahl und der Edelstahl bestehen aus mindestens 51% Eisenatomen. Beim Edelstahl kann beispielsweise der gewöhnliche Edelstahl mit der Bezeichnung 1.4301 verwendet werden.

Der Einsatz von Edelstahl und korrosionsbeständigen Aluminiumlegierungen ist insbesondere für Anwendungen im Reinraum vorteilhaft, da die Oberflächen des Reinraums üblicherweise regelmäßig mit aggressiven Reinigungsmedien in Kontakt kommen.

Es wäre aber auch denkbar, ein Blasformträgerteil, insbesondere das zweite, aus unterschiedlichen Materialien zu gestalten - in diesem Fall ist die Dichte aus Gesamtmasse durch Gesamtvolumen zu ermitteln.

Bei den Behältnissen kann es sich um Vorformlinge, Flaschen, Dosen, KEGS, Spritzen, Pouches oder dergleichen handeln.

Normalerweise nimmt ein Blasformträgerteil eine Blasformhälfte auf, wobei diese gemeinsam bewegbar sind. Eine Blasformhälfte bildet normalerweise eine seitliche Kontur einer Flasche ab - das Mundstück der Flasche und der Boden sind normalerweise nicht Bestandteil dieser Kontur.
Zwischen einem Blasformträgerteil und einer Blasformhälfte können dabei noch weitere Zwischenschalen wie Formträgerschalen (bildet normalerweise die Auflagefläche für das Druckkissen und ist am Blasformträger beweglich gelagert) oder Mutterformen (dienen normalerweise der Temperierung oder zur Aufnahme von Formen mit "Nicht-Standard-Durchmesser") oder Isolierschalen angeordnet sein. In einer möglichen Konfiguration ist - von der innenliegenden Flasche aus gesehen - folgende Anordnung in der Reihenfolge möglich: Blasformhälfte, Mutterformhälfte, Formträgerschale, Blasformträgerteil. Die Formträgerschale ist dabei meistens nur auf einer Seite, z.B. am ersten Blasformträgerteil angeordnet. Auf der zweiten Seite ist dann die Konfiguration wie folgt: Blasformhälfte, Mutterformhälfte, Blasformträgerteil.

Es ist aber auch denkbar dass die Kontur der herzustellenden Behälter direkt in den Blasformträger und/oder in die Formträgerschale eingebracht ist. In diesem Fall kann eine Blasform auch wegfallen.

Wenn von Blasformträgerteilen die Rede ist, sind somit die Teile gemeint, welche im geschlossenen Zustand einer Blasform am weitesten außen - gesehen von dem Behälter - angeordnet sind.

Weiterhin ist es zusätzlich möglich, auch die Dichte bzw. das Material mindestens eines der dem zweiten Blasformträgerteil zugeordneten Schalen (Blasformhälfte, Mutterformhälfte, Formträgerschale) geringer zu wählen. Bzgl. der Wärmeausdehnung bei einer Temperierung der Blasform sind jedoch beide Blasformhälften vorteilhaft aus demselben Material, insbesondere aus einer Aluminiumlegierung, mit derselben Dichte gefertigt.

Insbesondere ist auch die Masse des zweiten Blasformträgerteils geringer ist als die des ersten Blasformträgerteils. Dies bietet sich an, wenn man unterschiedliche Anforderungen an die Kinematik stellt, da so beispielsweise zum Öffnen auf einer Seite geringere Beschleunigungskräfte nötig sind als auf der anderen Seite. Anders gesagt können die Kurven oder Antriebe, welche die Beschleunigungskräfte aufbringen müssen, bei gleicher maximaler Kraft unterschiedliche Beschleunigungen der einzelnen Blasformträgerteile erreichen.

Das Massenverhältnis vom zweiten zum ersten Blasformträgerteil liegt insbesondere in einem Bereich von 0,1 bis 0,5, bevorzugt zwischen 0,15 und 0,35.

Die Masse des zweiten Blasformträgerteils liegt insbesondere in einem Bereich von 10 bis 20 kg, die des ersten Blasformträgerteils in einem Bereich von 40 bis 70 kg. Beide Massen sind ohne Anbauteile (Schrauben etc.) wiedergegeben.

Insbesondere ist die Gesamtdichte, und insbesondere auch die Gesamtmasse, aller am zweiten Blasformträgerteil angeordneten Teile (Schrauben, Schalen), welche mit diesem Teil mitbewegt werden, inklusive dem zweiten Blasformträgerteil, kleiner als die Dichte des ersten Blasformträgerteils inkl. aller am ersten Blasformträgerteil angeordneten Teile.

Insbesondere ist ein während der Öffnungsbewegung zurückgelegter Weg des zweiten Blasformträgerteils größer als ein zurückgelegter Weg des ersten Blasformträgerteils. Der zurückgelegte Weg kann beispielsweise anhand des Masse- oder Volumenschwerpunkts der Teile bestimmt werden. Hier ist insbesondere darauf zu achten, dass hiermit auch ein relativ zum Träger feststehendes (nicht bewegbares) erstes Blasformträgerteil mit umfasst ist.

Bei einer schwenkenden Öffnung der Blasformträgerteile oder eines Blasformträgerteils kann ein während der Öffnungsbewegung zurückgelegter Schwenkwinkel des zweiten Blasformträgerteils größer sein als ein zurückgelegter Schwenkwinkel des ersten Blasformträgerteils. Hier soll auch der feststehende Fall des ersten Blasformträgerteils mitumfasst sein.

Insbesondere ist bei dem weiteren Weg und bei dem Winkel ein Unterschied von mindestens 5%, bevorzugt mindestens 15%, noch bevorzugter mindestens 25% gegeben.

Insbesondere ist das zweite Blasformträgerteil gegenüber dem ersten Blasformträgerteil bezüglich einer ersten vorgegebenen Schwenkachse schwenkbar und das erste Blasformträgerteil gegenüber dem zweiten Blasformträgerteil bezüglich einer zweiten vorgegebenen Schwenkachse schwenkbar, und das erste Blasformträgerteil ist um einen ersten vorgegebenen Schwenkwinkel schwenkbar, und das zweite Blasformträgerteil ist um einen zweiten vorgegebenen Schwenkwinkel schwenkbar, und der zweite Schwenkwinkel ist in einem maximal geöffneten Zustand der Blasformträgerteile größer, insbesondere um mehr als 10°, als der erste Schwenkwinkel. Der maximal geöffnete Zustand ist insbesondere im Bereich der Entnahme des Behältnisses aus der Blasform gegeben.

Insbesondere sind beide Blasformträgerteile um eine gemeinsame Achse schwenkbar, also die erste Schwenkachse und die zweite Schwenkachse sind koaxial zueinander angeordnet.

Es wäre aber auch denkbar, die erste und die zweite Schwenkachse mit einem Abstand zu versehen.

Insbesondere ist nur im ersten Blasformträgerteil ein Druckkissenmechanismus vorhanden. Im Englischen wird dieser Mechanismus "Compensation" genannt. Dieser Mechanismus erfordert beispielsweise eine relative Beweglichkeit der (ersten) Blasformformhälfte (und ggf. den weiteren Zwischenschalen) gegenüber des ersten Blasformträgerteils, was wiederum bedeutet, dass man zusätzliche Lager und ggf. eine Formträgerschale, an der diese Lager befestigt sind, am ersten Blasformträgerteil unterbringen muss, was wiederum das Gewicht erhöht. Weiterhin umfasst ein Druckkissen normalerweise eine ringförmige Dichtung, welche auf der Innenseite des Blasformträgers und der Außenseite der nächsten inneren Schale, insbesondere der Trägerschale, anliegt. In diese Dichtung wird Druckluft (mit bis zu 40 bar) eingeleitet, um die nächste Schale weg vom Blasformträgerteil und gegen die Teile des anderen Blasformträgerteils zu drücken. Hierfür ist zusätzlich ein Druckluftanschluss an dem ersten Blasformträgerteil anzubringen, welcher über eine Verbindungsleitung mit einer Druckluftversorgung verbunden ist. Diese Verbindung ist um einiges leichter zu realisieren, wenn der zurückgelegte Weg oder Winkel beim Öffnen klein gehalten wird. Zudem treten sehr hohe Kräfte auf, welche ebenfalls von dem ersten Blasformträgerteil aufgenommen werden müssen, deswegen ist es von Vorteil, wenn dieses eine höhere Dichte bzw. Festigkeit aufweist.

Insbesondere sind nur am ersten Blasformträgerteil bewegliche Teile eines Verriegelungsmechanismus, um das erste Blasformträgerteil gegenüber dem zweiten Blasformträgerteil zu verriegeln, angeordnet. Durch diese Zuordnung können die Belastungen auf die Lager von dem Blasformträgerteil mit höherer Dichte bzw. Festigkeit aufgenommen werden. Zudem wird das größere Gewicht auf das Blasformträgerteil mit geringerem Weg oder Winkel gelegt.

Insbesondere umfasst der Verriegelungsmechanismus ein erstes zumindest mittelbar an dem ersten Blasformträgerteil angeordnetes Verriegelungselement und ein zweites zumindest mittelbar an dem zweiten Blasformträgerteil angeordnetes Verriegelungselement, wobei in einem verriegelten Zustand der Blasformträgerteile die Verriegelungselemente zusammenwirken, wobei wenigstens das erste Verriegelungselement bezüglich einer zweiten vorgegebenen Achse gegenüber dem Träger bewegbar ist, wobei die Schwenkbewegung des ersten Blasformträgerteils und die Bewegung des ersten Verriegelungselements mittels einer Kopplungseinrichtung miteinander derart gekoppelt sind, dass sich zumindest zeitweise während einer Bewegung des ersten Verriegelungselements bezüglich der zweiten vorgegebenen Achse die zweite vorgegebene Achse in einer senkrecht zu der zweiten Achse stehenden Richtung gegenüber dem Träger bewegt.

Insbesondere weist die Vorrichtung einen mit wenigstens einer Wandung gegenüber einer Umgebung abgetrennten Reinraum auf, innerhalb dessen zumindest die Blasformträgerteile und die Schalen bewegt werden.

Insbesondere ist das erste Blasformträgerteil bzw. die am ersten Blasformträgerteil angeordnete Blasformhälfte oder eine Zwischenschale zwischen der Blasformhälfte und dem Blasformträgerteil über mindestens eine, bevorzugt zwei (Vor- und Rücklauf), flexible Leitung(en) mit einem Temperiermedienanschluss verbunden und das zweite Blasformträgerteil wird insbesondere über Leitungen mit Temperiermedium versorgt, wobei die Leitungen in einer diesem Blasformträgerteil zugeordneten Schwenkachse angeordnet sind. Insbesondere handelt es sich bei den Leitungen um Bohrungen in der Schwenkachse, wobei sich die Schwenkachse mit dem zweiten Blasformträgerteil bei der Öffnungs- und Schließbewegung mitdreht.

Insbesondere ist das am zweiten Blasformträgerteil keine Trägerschale angeordnet, da auf dieser Seite des Formträgers kein Druckkissen vorhanden ist.
Unter einer zumindest mittelbaren Anordnung des jeweiligen Verriegelungselements an dem Blasformträgerteil wird verstanden, dass dieses Verriegelungselement z.B. direkt an dem jeweiligen Blasformträgerteil angeordnet ist oder beispielsweise an einem weiteren Element oder Bauteil, gegenüber dem auch das jeweilige Blasformträgerteil (orts-)fest angeordnet ist. So könnte etwa ein Verriegelungselement fest gegenüber dem Träger angeordnet sein und das diesem zugeordnete Blasformträgerteil ebenfalls fest gegenüber dem Träger angeordnet sein.

Dabei ist es denkbar, dass ein Verriegelungselement starr gegenüber dem jeweiligen Blasformträgerteil angeordnet ist und das andere definiert bewegbar, z.B. schwenkbar. Vorteilhaft ist jedoch wenigstens ein Verriegelungselement unmittelbar an dem ihm zugeordneten Blasformträgerteil angeordnet und besonders bevorzugt sind beide Verriegelungselemente jeweils an den ihnen zugeordneten Blasformträgerteilen angeordnet.

Bei einer weiteren vorteilhaften Ausführungsform ist die zweite vorgegebene Achse eine Schwenkachse und das erste Verriegelungselement ist gegenüber dieser bevorzugt stationär gegenüber dem ersten Blasformträgerteil angeordneten zweiten Schwenkachse schwenkbar.

Vorteilhaft bewegt sich mit dieser (Schwenk)achse auch das genannte erste Verriegelungselement, welches wie oben erwähnt, vorteilhaft schwenkbar bezüglich der besagten Schwenkachse angeordnet ist. Vorteilhaft handelt es sich bei dem beweglichen Träger um einen drehbaren Träger, wie beispielsweise ein Blasrad. Bei einer weiteren vorteilhaften Ausführungsform ist an diesem Träger eine Vielzahl von derartigen Blasstationen angeordnet.

Bei einer weiteren vorteilhaften Ausführungsform ist das erste Verriegelungselement entlang der Achse bewegbar. Bei dieser Ausführungsform könnte es sich bei dem ersten Verriegelungselement um einen stangenartigen oder bolzenartigen Körper handeln, der in seiner Längsrichtung verschoben wird, um beispielsweise in entsprechende Ausnehmungen oder hülsenartige Körper zum Zweck der Verriegelung einzugreifen.

Bei einer weiteren vorteilhaften Ausführungsform handelt es sich bei der Kopplungseinrichtung, welche die (Schwenk-) Bewegung des ersten Blasformträgerteils und des ersten Verrieglungselements miteinander koppelt, um eine mechanische Kopplungseinrichtung, d.h. die beiden genannten Schwenkbewegungen und die Verschiebebewegungen sind mechanisch miteinander gekoppelt. Damit werden vorteilhaft die Schwenkbewegung des Verriegelungselements und die Schwenkbewegung des ersten Blasformträgerteils durch einen gemeinsamen Mechanismus miteinander gekoppelt.

Bei einer weiteren vorteilhaften Ausführungsform weist die Vorrichtung einen mit wenigstens einer Wandung gegenüber einer Umgebung abgetrennten Reinraum auf, innerhalb dessen die Blasformträger bzw. evtl. die ganze Blasstation bewegt wird. Diese Ausführungsform ist insbesondere für eine aseptische Blasmaschine relevant, bei der die Blasstation innerhalb des besagten Reinraums transportiert wird. Bei einer vorteilhaften Ausführungsform wird dabei der Reinraum wenigstens teilweise auch durch den besagten Träger ausgebildet. So kann der Träger vorteilhaft ein C-förmiges Außenprofil haben, innerhalb dessen wenigstens teilweise die einzelnen Blasstationen angeordnet sind. Vorteilhaft ist die oben genannte Kopplungseinrichtung außerhalb des Reinraums angeordnet, beispielsweise unterhalb des Reinraums.

Bei einer weiteren vorteilhaften Ausführungsform ist auch das zweite Blasformträgerteil bezüglich einer vorgegebenen Schwenkachse schwenkbar. Bei einer besonders vorteilhaften Ausführungsform werden das erste Formträgerteil und das zweite Formträgerteil um eine gemeinsame geometrische Achse geschwenkt. Es wäre jedoch auch möglich, dass die Schwenkachse, um welche das erste Blasformträgerteil geschwenkt wird, parallel ist zu der Schwenkachse, um welche das zweite Blasformträgerteil geschwenkt wird. Vorteilhaft verlaufen diese Schwenkachsen parallel zu einer Längsrichtung des zu expandierenden Kunststoffvorformlings.

Bei den meisten bekannten Blasmaschinen, insbesondere Streckblasmaschinen, werden beide Formträgerhälften etwa um den gleichen Winkel geöffnet (aufgeschwenkt), um die Flasche entnehmen bzw. den Kunststoffvorformling einbringen zu können. Es kann jedoch manchmal auch sinnvoll sein, die nötige Öffnungsbewegung der Formträger (stark) asymmetrisch zu gestalten. In diesem Fall, der hier bevorzugt ist, schwenkt eine Formträgerhälfte wesentlich weiter auf als die andere. Hier erfolgt vorteilhaft eine Ansteuerung bzw. ein Antrieb der beiden Formträgerhälften getrennt.

Damit wird die Blasform unsymmetrisch geöffnet und vorteilhaft dient die Bewegung des ersten Blasformträgerteils lediglich zum Lösen eines Bodenteils der Blasform und die Bewegung des zweiten Blasformträgerteils zum Entnehmen der Kunststoffbehältnisse. Vorteilhaft wird dabei das erste Blasformträgerteil um einen Winkel geschwenkt, der zwischen 1° und 10°, bevorzugt zwischen 1° und 8°, bevorzugt zwischen 2° und 7° und besonders bevorzugt zwischen 3° und 6° liegt.

Bevorzugt ist in bzw. an dem Blasformträgerteil, welches um den geringeren Winkel geschwenkt wird, auch die Verriegelungswelle gelagert. Diese muss nach dem Schließen der beiden Formhälften eine Rotationsbewegung ausführen und so die beiden Blasformträger verriegeln.

Vorteilhaft wird das zweite Blasformträgerteil um einen Winkel geschwenkt, der zwischen 20° und 60°, bevorzugt zwischen 30° und 50°, bevorzugt zwischen 35° und 45° und besonders bevorzugt bei etwa 40° liegt. Vorteilhaft erstreckt sich eine die Schwenkachse definierende Schwenkwelle durch eine Wandung, welche insbesondere auch den Reinraum begrenzt und die Bewegungen der Schwenkwelle sind besonders bevorzugt mittels einer Dichtungseinrichtung abgedichtet.

Zu diesem Zweck weist die besagte Wandung vorteilhaft eine Durchführöffnung auf, durch welche sich die Schwenkwelle erstreckt. Dabei ist die Schwenkwelle gegenüber dieser Öffnung vorteilhaft nicht nur drehbar, sondern auch senkrecht zu der besagten Achse bewegbar. Vorteilhaft ist dabei die Dichtungseinrichtung einerseits an der Welle angeordnet und andererseits an der besagten Wandung. Dabei ist diese Dichtungseinrichtung vorteilhaft in der Lage, sowohl Rotationsbewegungen um einen vorgegebenen Winkel als auch (Verschiebe-) Bewegungen der Schwenkwelle in einer senkrecht zu der Schwenkwelle stehenden Richtung aufzunehmen. Vorteilhaft ist die Dichtungseinrichtung aus einem Kunststoff hergestellt. Vorteilhaft ist die Schwenkwelle entlang eines gekrümmten Pfades gegenüber dem Träger bewegbar.

Bei einer weiteren vorteilhaften Ausführungsform weist die Kopplungseinrichtung einen Hebel zum Schwenken des Blasformträgerteils bezüglich der zweiten Schwenkachse auf. Dieser Hebel erstreckt sich dabei vorteilhaft zumindest teilweise in einer senkrecht zu der Schwenkwelle stehenden Richtung. An diesen Hebel kann dabei beispielsweise eine Kurvenrolle angeordnet sein, welche mit einer insbesondere stationär angeordneten Führungskurve zusammenwirken kann.
Es wären jedoch auch andere Antriebsarten denkbar, wie beispielsweise Elektromotoren, pneumatische Antriebe, hydraulische Antriebe und dergleichen.
Bei einer weiteren vorteilhaften Ausführungsform weist die Kupplungseinrichtung einen drehfest an einer die Schwenkachse definierenden Schwenkwelle angeordneten Hebelarm auf, der gelenkig mit einem weiteren Schwenkarm verbunden ist. Durch diese gelenkige Ausbildung ist eine Kopplung zwischen der Schwenkbewegung des Verriegelungselements und der Verschiebebewegung der Schwenkwelle bzw. Schwenkachse selbst, insbesondere entlang einer kreisförmigen Bahn, möglich. Vorteilhaft wird daher die Schwenkwelle für den Verriegelungsmechanismus entlang einer kreisförmigen Bahn verschoben, wobei sich diese kreisförmige Bahn wiederum durch die Schwenkbewegung des ersten Blasformträgerteils ergibt.
Die Erfindung ist auch auf einen Blasformträger zum Halten einer Blasform gerichtet, umfassend ein erstes Blasformträgerteil und ein zweites Blasformträgerteil, wobei das zweite Blasformträgerteil von dem ersten Blasformträgerteil wegbewegbar ist, um die Blasform für die Entnahme eines Kunststoffbehältnisses und/oder für die Eingabe eines Vorformlings zu öffnen und wobei das zweite Blasformträgerteil auf das erste Blasformträgerteil zu bewegbar ist, um die Blasform zur Umformung des Vorformlings in einen geschlossenen Zustand zu überführen.

Erfindungsgemäß weist das zweite Blasformträgerteil eine geringere Dichte als das erste Blasformträgerteil auf. Die Tatsache, dass ein Blasformträgerteil, im vorliegenden Fall das zweite, direkt eine Blasformhälfte temperieren kann, kann auch als eigenständige Erfindung angesehen werden. Dies bietet den Vorteil, dass auf weitere Schalen dazwischen verzichtet werden kann. Dieser Zusammenhang kann auch für das andere Blasformträgerteil ausgenutzt werden. Insgesamt setzt sich dann eine Seite eines Blasformträgers genau aus zwei Hauptteilen (Schrauben etc. nicht beachtet): einem Blasformträgerteil und einer Blasform, wobei nur das Blasformträgerteil temperiert (also gekühlt oder beheizt) wird.
Insbesondere wird dies durch den Einsatz von einer Aluminiumlegierung als Material des Blasformträgerteils ermöglicht, da Aluminium eine hohe Wärmeleitfähigkeit besitzt.

Die Zeichnungen zeigen weitere Vorteile und Ausführungsformen. Darin zeigen:
- Fig. 1: eine schematische Darstellung einer Anlage zum Herstellen von Kunststoffbehältnissen;
- Fig. 2: eine Ansicht eines Reinraums im Bereich einer Blasstation;
- Fig. 3a: eine Blasstation nach dem Stand der Technik;
- Fig. 3b: eine Detaildarstellung der in Fig. 3a bezeichneten Vorrichtung;
- Fig. 4: eine schematische Darstellung einer erfindungsgemäßen Blasstation;
- Fig. 5a: die Blasstation aus Fig. 4 in einem geschlossenen Zustand;
- Fig. 5b: die Blasstation aus Fig. 4 in einem halb geöffneten Zustand;
- Fig. 5c: die Blasstation aus Fig. 4 in einem geöffneten Zustand; und
- Fig. 6: eine weitere Draufsicht auf eine Blasstation in einem geöffneten Zustand.

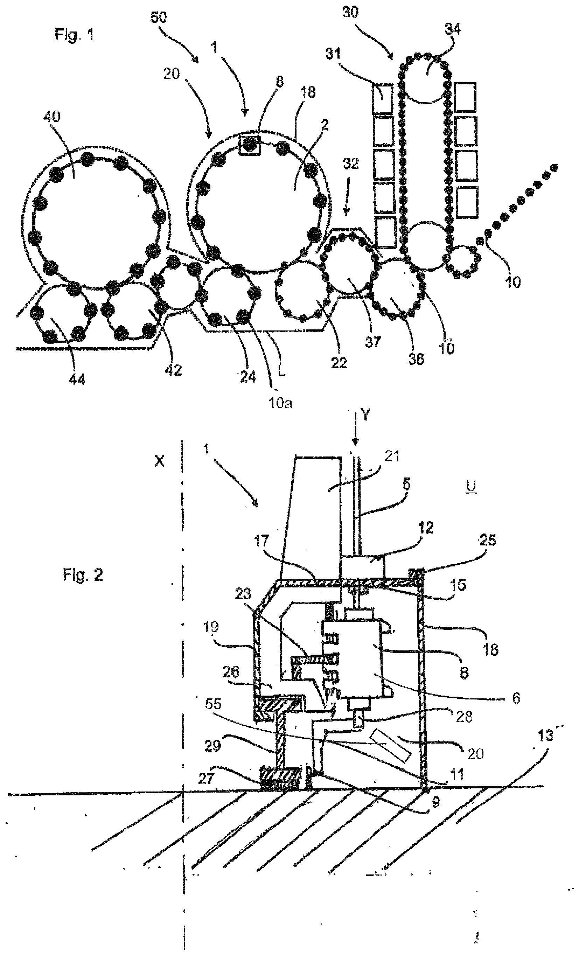

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.
Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen o ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

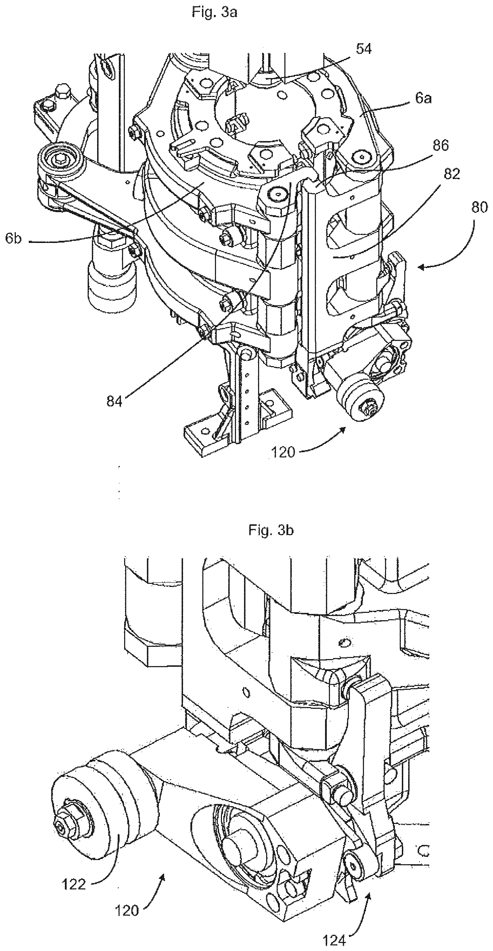

Figur 3a zeigt eine Blasstation nach dem Stand der Technik. Diese Blasstation weist dabei ein erstes Blasformträgerteil 6a und ein zweites Blasformträgerteil 6b auf, die geöffnet und geschlossen werden können. Das Bezugszeichen 54 kennzeichnet eine Blasdüse zum Expandieren der Kunststoffvorformlinge.

An dem ersten Blasformträgerteil 6a ist ein erstes Verriegelungselement 82 schwenkbar angeordnet. An dem zweiten Blasformträgerteil 6b ist ein zweites Verriegelungselement 84 angeordnet. In einem geschlossenen Zustand greift das erste Verriegelungselement 82 mit einem Eingriffsabschnitt 86 in das zweite Verriegelungselement 84 ein.

Das Bezugszeichen 120 kennzeichnet einen Betätigungsmechanismus zum Bewegen des Verriegelungselements.

Figur 3b zeigt eine Detaildarstellung der in Figur 3a gezeigten Vorrichtung. Man erkennt, dass der Betätigungsmechanismus 120 eine Kurvenrolle 122 aufweist, welche gegenüber einer (nicht gezeigten) Führungskurve abrollt. Das Bezugszeichen 124 kennzeichnet schematisch einen Einrastmechanismus, der bewirkt, dass das Verriegelungselement entweder in der geschlossenen oder in der geöffneten Stellung einrastet.

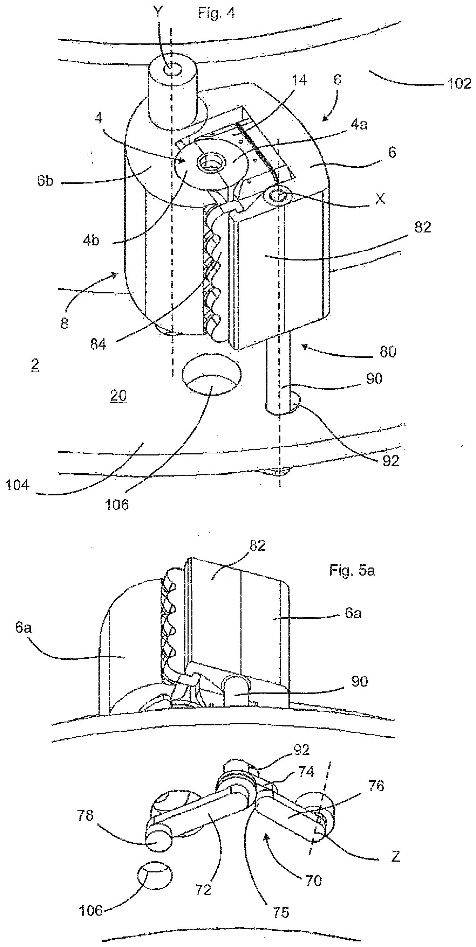

Figur 4 zeigt eine erfindungsgemäße Blasstation 8. Diese Blasstation 8 ist dabei an dem Träger 2 angeordnet. Der Träger 2 weist dabei eine innere Wandung 102 auf, welche gleichzeitig eine Begrenzung des Reinraums ausbildet. Diese Wandung 102 weist dabei einen kreisförmigen Außenumfang auf.

Das Bezugszeichen 104 bezieht sich auf eine Bodenwandung des Trägers 2, welche ebenfalls eine Grenze des Reinraums 20 ausbildet. In dieser Bodenwandung 104 ist eine Öffnung 106 angeordnet, durch welche hindurch eine Mechanik geführt werden kann, mit der eine Bodenform (nicht gezeigt) an die Blasform herangeführt werden kann.

Die Blasform 4 weist zwei Blasformteile 4a und 4b auf, welche in einem zusammengeklappten Zustand einen Hohlraum ausbilden, innerhalb dessen die Kunststoffvorformlinge durch Beaufschlagung mit einem Fluid, z.B. Druckluft expandiert werden.

Das Blasformteil 4a ist dabei mittels einer Trägerschale 14 an einem ersten Blasformträgerteil 6a angeordnet. Dabei kann ein (nicht gezeigtes) Druckkissen vorgesehen sein, welches es ermöglicht, dass bei Beaufschlagung mit Druckluft das Blasformteil 4a auf das zweite Blasformteil 4b zugespannt wird.

Das zweite Blasformteil 4b ist an einem zweiten Blasformträgerteil 6b angeordnet. Dieses zweite Blasformträgerteil 6b ist bezüglich einer ersten Schwenkwelle Y schwenkbar, um die Blasform zu öffnen und zu schließen.

Eine Schwenkwelle zum Schwenken des Blasformträgerteils 6b kann dabei beispielsweise gegenüber dem Träger 2 gelagert sein, wobei vorteilhaft entsprechende Lagereinrichtungen außerhalb des Reinraums angeordnet sind.

An dem zweiten Blasformträgerteil 6b ist ein zweites Verriegelungselement 84 angeordnet.
An dem ersten Blasformträgerteil 6a ist ein erstes Verriegelungselement 82 angeordnet, welches bezüglich einer zweiten Schwenkachse X schwenkbar ist. Zum Schwenken dieses ersten Verriegelungselements 82 ist eine Schwenkwelle 90 vorgesehen, welche bezüglich einer zweiten Schwenkachse X schwenkbar ist. Dabei erstreckt sich diese Schwenkwelle 90 hier durch eine Öffnung 92, die in der Wand 104 angeordnet ist, hindurch. Das Bezugszeichen 80 kennzeichnet den Verriegelungsmechanismus in seiner Gesamtheit.

Das erste Blasformträgerteil ist aus Edelstahl gefertigt. Das zweite Blasformträgerteil 6b ist aus einer Aluminiumlegierung gefertigt und besitzt somit eine geringere Dichte, aber auch eine geringere Festigkeit als das erste Blasformträgerteil. Die hohe Festigkeit von Edelstahl ist jedoch beim zweiten Blasformträgerteil nicht notwendig, da das Druckkissen (nicht mit Positionszeichen versehen) zwischen dem ersten Blasformträgerteil 6a und der Trägerschale 14 angeordnet ist und es auch keiner hohen Festigkeit bedarf, die Schwenkwelle 90 zu lagern. Dafür weist das zweite Blasformträgerteil eine geringe Dichte und eine geringe Masse auf, was einen großen Schwenkwinkel um die Achse Y innerhalb kurzer Zeit zulässt, ohne dass die Steuerkurven oder die Kurvenrollen zu sehr beansprucht werden.

Die Figuren 5a bis 5c zeigen drei Darstellungen in unterschiedlichen Öffnungsstellungen einer erfindungsgemäßen Blasstation 8. Bei der in Figur 5a gezeigten Situation ist die Blasform geschlossen und verriegelt. Unterhalb der Wand 104 und damit bevorzugt auch außerhalb des Reinraums ist eine in ihrer Gesamtheit mit 70 gekennzeichnete Kopplungseinrichtung vorgesehen, welche eine Schwenkbewegung des ersten Verriegelungselements 82 mit einer Schwenkbewegung des ersten Blasformträgerteils 6a koppelt. Das Bezugszeichen 72 kennzeichnet einen Schwenkhebel, an dem eine Kurvenrolle 78 angeordnet ist, mit der ein Schwenken der Schwenkwelle 90 erreicht wird.

Durch ein Schwenken des Hebels 72 wird gleichzeitig auch ein Arm 74 geschwenkt, der gelenkig mit einem weiteren Arm 76 verbunden ist. Das Bezugszeichen 75 kennzeichnet dabei grob eine entsprechende Gelenkverbindung zwischen den Armen 74 und 76. Durch ein Schwenken des Arms 74 wird auch die Schwenkwelle 90 gegenüber der Öffnung 92 bewegt bzw. in einer senkrecht zu der Drehachse X stehenden Richtung verschoben. Genauer gesagt wird die Schwenkwelle 90 entlang eines kreissegmentförmigen Pfades bewegt.

Der Hebel 76 ist schwenkbar bezüglich einer dritten Schwenkachse Z an einer Halteeinrichtung und damit vorteilhaft an der Wand 104 angeordnet.

In den beigefügten Figuren ist nur eine derartige Blasstation dargestellt. Üblicherweise befinden sich mehrere dieser Blasstationen an einen vorteilhaft rotierenden Karussell. Wie in den Figuren 4 und 5a bis 5c erkennbar, ist das erste Trägerteil über die Hauptwelle gelagert. In dem ersten Formträgerteil ist wiederum die Verriegelungswelle drehbar gelagert. An dieser Verriegelungswelle 90 sind wiederum Haken 86 angeordnet, die bei geschlossener Verriegelung mit einem entsprechenden Verriegelungshaken des zweiten Blasformträgerteils 6b zusammenwirken bzw. in Eingriff sind. Wie erwähnt ist die Kurvenrolle bzw. Ansteuerungsrolle 78 über den Hebel 72 ebenfalls mit der Verriegelungswelle 90 verbunden. Die Kurvenrolle befindet sich dabei in der Maschine vorteilhaft unterhalb der beiden Blasformträgerteile 6a und 6b.

Bei dem Öffnungsvorgang wird bei einem drehenden Karussell die Kurvenrolle 78 von einer (insbesondere stationär angeordneten) Kurve angesteuert. Dabei dreht sich die Verriegelungswelle 90 entgegen dem Urzeigersinn. Auf diese Weise wird die Verriegelung zwischen dem ersten Verriegelungselement 82 und dem zweiten Verriegelungselement 84 gelöst. Vorteilhaft ist die Geometrie der Hebelanordnung so gewählt, dass sich zunächst das erste Verriegelungselement nahezu ausschließlich nach vorne bewegt, d.h. vom Zentrum der Station weg und anschließend rasch nach rechts, um das erste Blasformträgerteil 6a schnell zu öffnen.

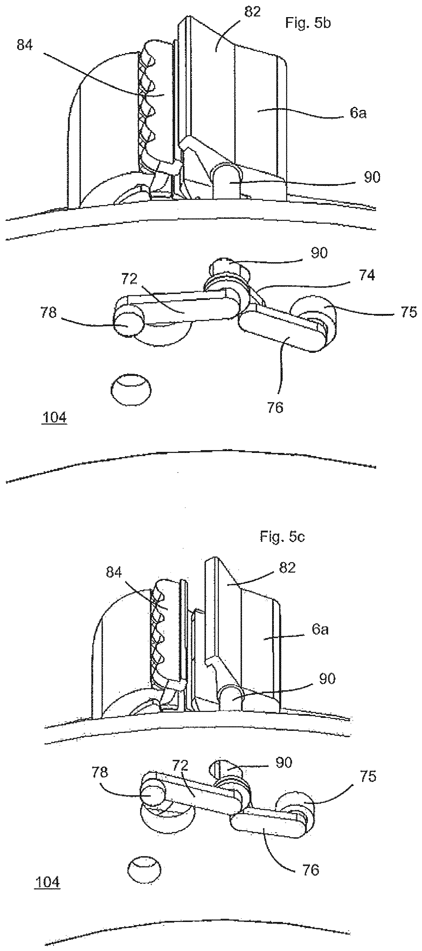

Diese Situation ist in Figur 5b gezeigt, welche einen halb geöffneten Zustand zeigt. Dabei ist das erste Verriegelungselement bereits außer Eingriff mit dem zweiten Verriegelungselement 84 und die Verriegelungswelle 90 hat sich gegenüber der Öffnung 92 erst geringfügig bewegt.

Wird die Kurvenrolle 78 weiterbewegt, so dreht sich die Verriegelungswelle 90 auch noch weiter entgegen dem Urzeigersinn. Durch den Hebel 74 bzw. das Verriegelungsgelenk 75 schwenkt das gesamte Blasformträgerteil 6a entgegen dem Urzeigersinn auf. Diese Situation ist in Figur 5c gezeigt. Die Weite der jeweiligen Öffnungsbewegung lässt sich durch eine geschickte Wahl der Längen des Elements 74 und des Elements 76 den Erfordernissen anpassen. Das Schließen und Verriegeln der Blasstation erfolgt in umgekehrter Reihenfolge. Bei der in Fig. 5c gezeigten Situation ist zur besseren Veranschaulichung das linke Blasformträgerteil 6b in einem geschlossenen Zustand gezeigt. Tatsächlich wäre zu diesem Zeitpunkt dieses Blasformträgerteil weit aufgeklappt.

Der Vorteil dieser Konstruktion liegt darin, dass zwei Bewegungen, nämlich die Bewegungen des ersten Blasformträgerteils und der Verriegelungswelle mit nur einer Kurve gesteuert werden können. Außerdem ist es möglich, die Bewegungen der beiden Formträgerteile unabhängig voneinander auszuführen. Dabei kann zum Beispiel auch die Bewegung des Formträgerteils 6a früher enden als die Bewegung des zweiten Formträgerteils 6b. Dies ist im Stand der Technik durch eine üblicherweise starre Kopplung der beiden Formträgerteile nicht möglich.

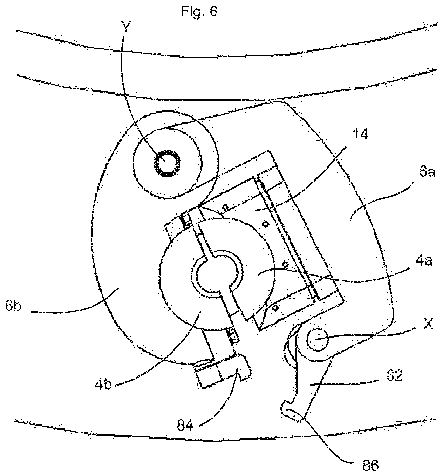

Figur 6 zeigt eine weitere Draufsicht auf eine erfindungsgemäße Blasstation. Bei dieser Situation ist sowohl das Verriegelungselement 82 geöffnet als auch das erste Blasformträgerteil 6a geöffnet und damit auch die Blasform geöffnet. Aus Gründen der Anschaulichkeit wurde das zweite Blasformträgerteil 6b hier noch geschlossen dargestellt. In der Praxis wäre dieses Blasformträgerteil jedoch zu einem entsprechenden Zeitpunkt bereits weit geöffnet, um so beispielsweise ein fertig geblasenes Behältnis entnehmen oder auch einen Kunststoffvorformling einführen zu können.

Nicht dargestellt, aber vorhanden, ist eine Verbindungsleitung für Temperiermedien zu den rechten Formträgerteilen (6a) bzw. -schalen (14, 4a). Diese Schläuche (Vor- und Rücklauf) erstrecken sich von der Wand 102 bis an die Unterseite (also in die Bildebene hinein) der Trägerschale 14. In der Trägerschale wird von dem Temperiermedium dann ein Labyrinth durchlaufen, um möglichst alle Bereich der Trägerschale 14, welche die Blasform 4a berühren, auf konstanter Temperatur zu halten. Im linken Formträger befindet sich ebenfalls zur Temperierung der Blasform 4b ein Labyrinth, allerdings erhält dieses Labyrinth das Temperiermedium direkt von der sich mit dem Blasformträger 6b mitdrehenden Welle Y.

Es wird daher vorgeschlagen, dass die Bewegung eines oder mehrerer Formträgerteile und die Bewegungen der Verriegelungswelle über einen oder mehrere Hebel bzw. Verbindungsgelenke oder sonstige Maschinenelemente miteinander (insbesondere mechanisch) gekoppelt sind.

Vorteilhaft kann sich ein Blasformträgerteil 6a unabhängig von einem anderen Blasformträgerteil 6b bewegen. Dadurch können die Bewegungen der beiden Blasformträgerteile gleichzeitig oder zu unterschiedlichen Zeitpunkten beginnen sowie gleichzeitig oder zu unterschiedlichen Zeitpunkten enden. In den oben dargestellten Beispielen wäre es sinnvoll, wenn die Bewegungen beider Formträgerteile gleichzeitig starten, aber die Bewegung des ersten Blasformträgerteils 6a früher beendet ist als die Bewegung des zweiten Blasformträgerteils 6b, da hier das zweite Blasformträgerteil 6b eine größere Schwenkbewegung bzw. einen größeren Schwenkwinkel ausführen muss.

Bei einer weiteren vorteilhaften Ausführungsform wäre es auch möglich, dass beide Formträgerteile 6a und 6b und auch die Bewegung der Verriegelungswelle durch eine Ansteuerung erzeugt werden. Dies wäre beispielsweise durch eine entsprechende Verbindung der beiden Formträgerteile im Bereich der Hauptwelle möglich. Durch Betätigung der Ansteuerung könnte dann auch das erste Formträgerteil mitbewegt werden und durch eine Bewegung des ersten Formträgerteils könnte auch das zweite Formträgerteil 6b bewegt werden. Dabei könnte eine Kopplung beispielsweise durch Zahnräder und dergleichen erfolgen.

Die Anmelderin behält sich vor, sämtliche in der Beschreibung genannten Merkmale als erfindungswesentlich zu beanspruchen, sofern diese einzeln oder in Kombination neu gegenüber dem Stand der Technik sind.

### Bezugszeichenliste

- 1: Umformungsvorrichtung
- 2: Transportrad
- 4: Blasform
- 4a, b: Blasformteile, Blasformhälfte
- 5: Reckstange
- 6: Blasformträger
- 6a: erstes Blasformträgerteil
- 6b: zweites Blasformträgerteil
- 8: Blas-/Umformungsstationen
- 9: Führungskurve
- 10: Kunststoffvorformlinge
- 10a: Behältnisse
- 11: Folgeeinrichtung
- 12: Schlitten
- 13: Boden
- 14: (Form-)Trägerschale
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen von Kunststoffbehältnissen
- 54: Blasdüse
- 55: Sterilisationseinrichtung
- 70: Kopplungseinrichtung
- 72: Schwenkhebel
- 74: erster Arm
- 75: Gelenkverbindung
- 76: zweiter Arm
- 78: Kurvenrolle
- 80: Verriegelungsmechanismus
- 82: erstes Verriegelungselement
- 84: zweites Verriegelungselement
- 86: Eingriffsabschnitt
- 90: Schwenkwelle
- 92: Öffnung
- 98: Dichtungseinrichtung
- 102: innere Wandung
- 104: Bodenwandung
- 106: Öffnung
- 120: Betätigungsmechanismus
- 122: Kurvenrolle
- 124: Einrastmechanismus
- L: punktierte Linie
- U: unsterile Umgebung
- X: Schwenkachse
- Y: Schwenkachse
- Z: dritte Schwenkachse

## Patentansprüche

1. Vorrichtung (1) zum Umformen von Kunststoffvorformlingen (10) zu Kunststoffbehältnissen (10a) mit wenigstens einer an einem beweglichen Träger (2) angeordneten Blasstation (8), wobei diese Blasstation (8) einen Blasformträger (6) zum Halten einer Blasform (4a, 4b) aufweist und dieser Blasformträger (6) ein erstes Blasformträgerteil (6a) und ein zweites Blasformträgerteil (6b) aufweist, wobei das zweite Blasformträgerteil (6b) von dem ersten Blasformträgerteil (6a) wegbewegbar ist, um die Blasform (4a, 4b) für die Entnahme eines Kunststoffbehältnisses (10a) und/oder für die Eingabe eines Vorformlings (10) zu öffnen und wobei das zweite Blasformträgerteil (6b) auf das erste Blasformträgerteil (6a) zu bewegbar ist, um die Blasform (4a, 4b) zur Umformung des Vorformlings (10) in einen geschlossenen Zustand zu überführen,
**dadurch gekennzeichnet, dass**
das zweite Blasformträgerteil (6b) eine geringere Dichte als das erste Blasformträgerteil (6a) aufweist.

2. Vorrichtung (1) nach Anspruch 1,
**dadurch gekennzeichnet, dass**
die Masse des zweiten Blasformträgerteils (6b) geringer ist als die des ersten Blasformträgerteils (6a).

3. Vorrichtung (1) nach Anspruch 1 oder 2,
**dadurch gekennzeichnet, dass**
ein während der Öffnungsbewegung zurückgelegter Weg des zweiten Blasformträgerteils (6b) größer ist als ein zurückgelegter Weg des ersten Blasformträgerteils (6a).

4. Vorrichtung (1) nach einem der vorangegangenen Ansprüche,
**dadurch gekennzeichnet, dass**
ein während der Öffnungsbewegung zurückgelegter Schwenkwinkel des zweiten Blasformträgerteils (6b) größer ist als ein zurückgelegter Schwenkwinkel des ersten Blasformträgerteils (6a).

5. Vorrichtung (1) nach einem der vorangegangenen Ansprüche,
**dadurch gekennzeichnet, dass**
das zweite Blasformträgerteil (6b) gegenüber dem ersten Blasformträgerteil (6a) bezüglich einer ersten vorgegebenen Schwenkachse (Y) schwenkbar ist und das erste Blasformträgerteil (6a) gegenüber dem zweiten Blasformträgerteil (6b) bezüglich einer zweiten vorgegebenen Schwenkachse (Y) schwenkbar ist und das erste Blasformträgerteil (6a) um einen ersten vorgegebenen Schwenkwinkel schwenkbar ist und das zweite Blasformträgerteil (6b) um einen zweiten vorgegebenen Schwenkwinkel schwenkbar ist und der zweite Schwenkwinkel in einem maximal geöffneten Zustand der Blasformträgerteile (6a, 6b) größer ist, insbesondere um mehr als 10°, als der erste Schwenkwinkel.

6. Vorrichtung (1) nach einem der vorangegangenen Ansprüche,
**dadurch gekennzeichnet, dass**
beide Blasformträgerteile (6a, 6b) um eine gemeinsame Achse (Y) schwenkbar sind, also die erste Schwenkachse und die zweite Schwenkachse koaxial angeordnet sind.

7. Vorrichtung (1) nach einem der vorangegangenen Ansprüche,
**dadurch gekennzeichnet, dass**
nur im ersten Blasformträgerteil (6a) ein Druckkissenmechanismus zum Verspannen der Blasformhälften gegeneinander (4a, 4b) vorhanden ist.

8. Vorrichtung (1) nach einem der vorangegangenen Ansprüche,
**dadurch gekennzeichnet, dass**
ein Verriegelungsmechanismus zum Verriegeln der Blasformträgerteile (6a, 6b) vorhanden ist, wobei nur am ersten Blasformträgerteil (6a) bewegliche Teile des Verriegelungsmechanismus (80), um das erste Blasformträgerteil (6a) gegenüber dem zweiten Blasformträgerteil (6b) zu verriegeln, angeordnet sind.

9. Vorrichtung (1) nach Anspruch 8,
**dadurch gekennzeichnet, dass**
der Verriegelungsmechanismus (80) ein erstes zumindest mittelbar an dem ersten Blasformträgerteil (6a) angeordnetes Verriegelungselement (82) und ein zweites zumindest mittelbar an dem zweiten Blasformträgerteil (6b) angeordnetes Verriegelungselement (84) aufweist, wobei in einem verriegelten Zustand der Blasformträgerteile (6a, 6b) die Verriegelungselemente (82, 84) zusammenwirken, wobei wenigstens das erste Verriegelungselement (82) bezüglich einer zweiten vorgegebenen Achse (X) gegenüber dem Träger (2) bewegbar ist, wobei die Schwenkbewegung des ersten Blasformträgerteils (6a) und die Bewegung des ersten Verriegelungselements (82) mittels einer Kopplungseinrichtung (70) miteinander derart gekoppelt sind dass sich zumindest zeitweise während einer Bewegung des ersten Verriegelungselements (82) bezüglich der zweiten vorgegebenen Achse (X) die zweite vorgegebene Achse (X) in einer senkrecht zu der zweiten Achse (X) stehenden Richtung gegenüber dem Träger (2) bewegt.

10. Vorrichtung (1) nach einem der vorangegangenen Ansprüche,
**dadurch gekennzeichnet, dass**
die Vorrichtung (1) einen mit wenigstens einer Wandung gegenüber einer Umgebung (U) abgetrennten Reinraum (20) aufweist, innerhalb dessen zumindest die Blasformträgerteile (6a, 6b) und insbesondere auch die Blasformen (4a, 4b), bewegt werden.

11. Vorrichtung nach einem der vorangegangenen Ansprüche,
**dadurch gekennzeichnet, dass**
das erste Blasformträgerteil (6a) bzw. die am ersten Blasformträgerteil (6a) angeordnete Blasformhälfte (4a) oder eine Zwischenschale zwischen der Blasformhälfte (4a) und dem Blasformträgerteil (6a) über mindestens eine, bevorzugt zwei (Vor- und Rücklauf), flexible Leitung(en) mit einem Temperiermedienanschluss verbunden ist und das zweite Blasformträgerteil (6b) über Leitungen mit Temperiermedium versorgt wird, wobei die Leitungen in einer diesem Blasformträgerteil (6a) zugeordneten Schwenkachse (Y) angeordnet sind.

12. Blasformträger (6) zum Halten einer Blasform (4a, 4b) umfassend ein erstes Blasformträgerteil (6a) und ein zweites Blasformträgerteil (6b), wobei das zweite Blasformträgerteil (6b) von dem ersten Blasformträgerteil (6a) wegbewegbar ist, um die Blasform (4a, 4b) für die Entnahme eines Kunststoffbehältnisses (10a) und/oder für die Eingabe eines Vorformlings (10) zu öffnen und wobei das zweite Blasformträgerteil (6b) auf das erste Blasformträgerteil (6a) zu bewegbar ist, um die Blasform (4a, 4b) zur Umformung des Vorformlings (10) in einen geschlossenen Zustand zu überführen,
**dadurch gekennzeichnet, dass**
das zweite Blasformträgerteil (6b) eine geringere Dichte als das erste Blasformträgerteil (6a) aufweist.

## Claims

1. An apparatus (1) for forming plastic preforms (10) into plastic containers (10a), with at least one blowing station (8) arranged on a moving carrier (2), wherein the blowing station (8) has a blow mould carrier (6) for holding a blow mould (4a, 4b) and the blow mould carrier (6) has a first blow mould carrier part (6a) and a second blow mould carrier part (6b), wherein the second blow mould carrier part (6b) can be moved away from the first blow mould carrier part (6a) in order to open the blow mould (4a, 4b) for removal of a plastic container (10a) and/or for insertion of a preform (10), and wherein the second blow mould carrier part (6b) can be moved towards the first blow mould carrier part (6a) in order to transfer the blow mould (4a, 4b) into a close state for forming the preform (10),
**characterized in that**
the second blow mould carrier part (6b) has a lower density than the first blow mould carrier part (6a).

2. The apparatus (1) according to claim 1,
**characterized in that**
the mass of the second blow mould carrier part (6b) is less than that of the first blow mould carrier part (6a).

3. The apparatus (1) according to claim 1 or 2,
**characterized in that**
a distance travelled during an opening movement by the second blow mould carrier part (6b) is greater than a distance travelled by the first blow mould carrier part (6a).

4. The apparatus (1) according to one of the preceding claims,
**characterized in that**
a pivot angel covered during an opening movement by the second blow mould carrier (6b) part is greater than a pivot angle covered by the first blow mould carrier part (6a).

5. The apparatus (1) according to one of the preceding claims,
**characterized in that**
the second blow mould carrier part (6b) is pivotable in relation to the first blow mould carrier part (6a) about a first predefined pivot axis (Y) and the first blow mould carrier part (6a) is pivotable in relation to the second blow mould carrier part (6b) about a second predefined pivot axis (Y), and the first blow mould carrier part (6a) is pivotable through a first predefined pivot angle and the second blow mould carrier part (6b) is pivotable through a second predefined pivot angle, and in the fully open state the blow mould carrier parts (6a, 6b) the second pivot angel is greater, in particular by more than 10°, than the first pivot angle.

6. The apparatus (1) according to one of the preceding claims,
**characterized in that** both blow mould carrier parts (6a, 6b) are pivotable about a common axis (Y), wherein the first pivot axis and the second pivot axis are arranged coaxially.

7. The apparatus (1) according to one of the preceding claims,
**characterized in that**
a pressure pad mechanism for clamping the blow mould halves (4a, 4b) together is present only in the first blow mould carrier part (6a).

8. The apparatus (1) according to one of the preceding claims,
**characterized in that**
a locking mechanism is provided for locking the blow mould carrier parts (6a, 6b), wherein moving parts of the locking mechanism (80) for locking the first blow mould carrier part (6a) against the second blow mould carrier part (6b) are arranged only on the first blow mould carrier part (6a).

9. The apparatus (1) according to claim 8,
**characterized in that**
the locking mechanism (80) has a first locking element (82) arranged at least indirectly on the first blow mould carrier part (6a) and a second locking element (84) arranged at least indirectly on the second blow mould carrier part (6b), wherein in a locked state of the blow mould carrier parts (6a, 6b), the locking elements (82, 84) cooperate, wherein at least the first locking element (82) is moveable about a second predefined axis (X) in relation to the carrier (2), wherein the pivot movement of the first blow mould carrier part (6a) and the movement of the first locking element (82) are coupled together by means of a coupling device (70) such that for at least part of the time during movement of the first locking element (82) about the second predefined axis (X), the second predefined axis (X) moves in relation to the carrier (2) in a direction standing perpendicular to the second axis (X).

10. The apparatus (1) according to one of the preceding claims,
**characterized in that**
the apparatus (1) has a clean room (20) separated from the environment (U) by at least one wall, within which at least the blow mould carrier parts (6a, 6b) and in particular the blow moulds (4a, 4b) are moved.

11. The apparatus according to one of the preceding claims,
**characterized in that**
the first blow mould carrier part (6a), or the blow mould half (4a) arranged on the first blow mould carrier part (6a), or an intermediate shell between the blow mould half (4a) and the blow mould carrier part (6a), is connected to a tempering medium connection via at least one flexible line, and the second blow mould carrier part (6b) is supplied with tempering medium via lines, wherein the lines are arranged in a pivot axis (Y) associated with this blow mould carrier part (6a).

12. A blow mould carrier (6) for holding a blow mould (4a, 4b), comprising a first blow mould carrier part (6a) and a second blow mould carrier part (6b), wherein the second blow mould carrier part (6b) can be moved away from the first blow mould carrier part (6a) in order to open the blow mould (4a, 4b) for removal of a plastic container (10a) and/or for insertion of a preform (10), and wherein the second blow mould carrier part (6b) can be moved towards the first blow mould carrier part (6a) in order to transfer the blow mould (4a, 4b) into a closed state for forming the preform (10),
**characterized in that**
the second blow mould carrier part (6b) has a lower density than the first blow mould carrier part (6a).

## Revendications

1. Dispositif (1) servant à mettre en forme des préformes en plastique (10) en des récipients en plastique (10a), comprenant au moins une station de soufflage (8) disposée au niveau d'un support (2) mobile, dans lequel ladite station de soufflage (8) présente un support de moule de soufflage (6) servant à maintenir un moule de soufflage (4a, 4b) et ledit support de moule de soufflage (6) présente une première partie de support de moule de soufflage (6a) et une seconde partie de support de moule de soufflage (6b), dans lequel la seconde partie de support de moule de soufflage (6b) peut être déplacée de manière à s'éloigner de la première partie de support de moule de soufflage (6a) afin d'ouvrir le moule de soufflage (4a, 4b) pour le retrait d'un récipient en plastique (10a) et/ou pour l'introduction d'une préforme (10) et dans lequel la seconde partie de support de moule de soufflage (6b) peut être déplacée en direction de la première partie de support de moule de soufflage (6a) afin de transférer dans un état fermé le moule de soufflage (4a, 4b) aux fins de la mise en forme de la préforme (10),
**caractérisé en ce que**
la seconde partie de support de moule de soufflage (6b) présente une densité inférieure à celle de la première partie de support de moule de soufflage (6a).

2. Dispositif (1) selon la revendication 1,
**caractérisé en ce que**
la masse de la seconde partie de support de moule de soufflage (6b) est inférieure à celle de la première partie de support de moule de soufflage (6a).

3. Dispositif (1) selon la revendication 1 ou 2,
**caractérisé en ce que**
un trajet parcouru au cours du déplacement d'ouverture de la seconde partie de support de moule de soufflage (6b) est plus grand qu'un trajet parcouru de la première partie de support de moule de soufflage (6a).

4. Dispositif (1) selon l'une quelconque des revendications précédentes,
**caractérisé en ce que**
un angle de pivotement parcouru au cours du déplacement d'ouverture de la seconde partie de support de moule de soufflage (6b) est plus grand qu'un angle de pivotement parcouru de la première partie de support de moule de soufflage (6a).

5. Dispositif (1) selon l'une quelconque des revendications précédentes,
**caractérisé en ce que**
la seconde partie de support de moule de soufflage (6b) peut être pivotée par rapport à la première partie de support de moule de soufflage (6a) par rapport à un premier axe de pivotement (Y) prédéfini et la première partie de support de moule de soufflage (6a) peut être pivotée par rapport à la seconde partie de support de moule de soufflage (6b) par rapport à un deuxième axe de pivotement (Y) prédéfini et la première partie de support de moule de soufflage (6a) peut être pivotée selon un premier angle de pivotement prédéfini et la seconde partie de support de moule de soufflage (6b) peut être pivotée selon un deuxième angle de pivotement prédéfini et le deuxième angle de pivotement est plus grand, en particulier de plus de 10°, que le premier angle de pivotement lorsque les parties de support de moule de soufflage (6a, 6b) sont ouvertes au maximum.

6. Dispositif (1) selon l'une quelconque des revendications précédentes,
**caractérisé en ce que**
les deux parties de support de moule de soufflage (6a, 6b) peuvent pivoter autour d'un axe (Y) commun, donc le premier axe de pivotement et le deuxième axe de pivotement sont disposés de manière coaxiale.

7. Dispositif (1) selon l'une quelconque des revendications précédentes,
**caractérisé en ce que**
qu'un mécanisme de coussin de pression servant à serrer les moitiés de moule de soufflage l'une contre l'autre (4a, 4b) est présent seulement dans la première partie de support de moule de soufflage (6a).

8. Dispositif (1) selon l'une quelconque des revendications précédentes,
**caractérisé en ce que**
un mécanisme de verrouillage servant à verrouiller les parties de support de moule de soufflage (6a, 6b) est présent, dans lequel des parties mobiles du mécanisme de verrouillage (80) pour verrouiller la première partie de support de moule de soufflage (6a) par rapport à la seconde partie de support de moule de soufflage (6b), sont disposées seulement au niveau de la première partie de support de moule de soufflage (6a).

9. Dispositif (1) selon la revendication 8,
**caractérisé en ce que**
le mécanisme de verrouillage (80) présente un premier élément de verrouillage (82) disposé au moins indirectement au niveau de la première partie de support de moule de soufflage (6a) et un deuxième élément de verrouillage (84) disposé au moins indirectement au niveau de la seconde partie de support de moule de soufflage (6b), dans lequel les éléments de verrouillage (82, 84) coopèrent lorsque les parties de support de moule de soufflage (6a, 6b) sont verrouillées, dans lequel au moins le premier élément de verrouillage (82) peut être déplacé par rapport au support (2) par rapport à un deuxième axe (X) prédéfini, dans lequel le déplacement par pivotement de la première partie de support de moule de soufflage (6a) et le déplacement du premier élément de verrouillage (82) sont couplés l'un à l'autre au moyen d'un système de couplage (70) de telle manière que le deuxième axe (X) prédéfini se déplace dans une direction perpendiculaire par rapport au deuxième axe (X) par rapport au support (2) au moins par intermittence au cours d'un déplacement du premier élément de verrouillage (82) par rapport au deuxième axe (X) prédéfini.

10. Dispositif (1) selon l'une quelconque des revendications précédentes,
**caractérisé en ce que**
le dispositif (1) présente une salle blanche (20) séparée d'un extérieur (U) avec au moins une cloison, à l'intérieur de laquelle au moins les parties de support de moule de soufflage (6a, 6b) et en particulier également les moules de soufflage (4a, 4b) sont déplacés.

11. Dispositif selon l'une quelconque des revendications précédentes,
**caractérisé en ce que**
la première partie de support de moule de soufflage (6a) ou la moitié de moule de soufflage (4a) disposée au niveau de la première partie de support de moule de soufflage (6a) ou une coque intermédiaire entre la moitié de moule de soufflage (4a) et la partie de support de moule de soufflage (6a) est reliée par l'intermédiaire d'au moins un conduit flexible, de manière préférée de deux conduits flexibles (arrivée et retour), à un raccord de milieu de thermorégulation et la seconde partie de support de moule de soufflage (6b) est alimentée en milieu de thermorégulation par l'intermédiaire de conduits, dans lequel les conduits sont disposés dans un axe de pivotement (Y) associé à ladite partie de support de moule de soufflage (6a).

12. Support de moule de soufflage (6) servant à maintenir un moule de soufflage (4a, 4b), comprenant une première partie de support de moule de soufflage (6a) et une seconde partie de support de moule de soufflage (6b), dans lequel la seconde partie de support de moule de soufflage (6b) peut être déplacée de manière à s'éloigner de la première partie de support de moule de soufflage (6a) afin d'ouvrir le moule de soufflage (4a, 4b) pour le retrait d'un récipient en plastique (10a) et/ou pour l'introduction d'une préforme (10) et dans lequel la seconde partie de support de moule de soufflage (6b) peut être déplacée en direction de la première partie de support de moule de soufflage (6a) afin de transférer dans un état fermé le moule de soufflage (4a, 4b) aux fins de la mise en forme de la préforme (10),
**caractérisé en ce que**
la seconde partie de support de moule de soufflage (6b) présente une densité inférieure à celle de la première partie de support de moule de soufflage (6a).
